Europäisches Patentamt

(19) European Patent Office (11) Publication number: **0 067 875**

Office européen des brevets **B1**

(12) **EUROPEAN PATENT SPECIFICATION**

(45) Date of publication of patent specification: **01.03.89** (51) Int. Cl.⁴: **G 05 B 19/405**

(21) Application number: **81903075.0**

(22) Date of filing: **18.11.81**

(86) International application number:
**PCT/JP81/00343**

(87) International publication number:
**WO 82/02261 08.07.82 Gazette 82/17**

(54) **SYSTEM FOR EXECUTING A PROGRAM.**

<table>
<tr><td>

(30) Priority: **29.12.80 JP 185430/80**

(43) Date of publication of application:
**29.12.82 Bulletin 82/52**

(45) Publication of the grant of the patent:
**01.03.89 Bulletin 89/09**

(84) Designated Contracting States:
**CH DE FR GB LI**

(56) References cited:
**JP-A-49 100 478**
**JP-A-51 062 280**

**IBM TECHNICAL DISCLOSURE BULLETIN, vol. 21, no. 2, July 1978, pages 836-837, New York, US; A. GURUGE: "Preventing unauthorized access to diskett-loaded microcode"**

The file contains technical information submitted after the application was filed and not included in this specification

</td><td>

(73) Proprietor: **FANUC LTD**
**3580, Shibokusa Aza-Komanba Oshino-mura Minamitsuru-gun Yamanashi 401-05 (JP)**

(72) Inventor: **KISHI, Hajimu**
**Hinohirayamadai-jutaku 1104 6-7-8, Asahigaoka Hino-shi Tokyo 191 (JP)**
Inventor: **SEKI, Masaki**
**3-15-2-406, Takaidonishi Suginami-ku Tokyo 168 (JP)**
Inventor: **TANAKA, Kunio**
**C-7-9, 711, Sandahigashi-cho Hachioji-shi Tokyo 193 (JP)**
Inventor: **TAKEGAHARA, Takashi**
**Shanbohru-hachioji 604 1-9, Myojin-cho 4-chome Hachioji-shi Tokyo 192 (JP)**

(74) Representative: **Billington, Lawrence Emlyn et al**
**HASELTINE LAKE & CO Hazlitt House 28 Southampton Buildings Chancery Lane London WC2A 1AT (GB)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a system for executing a programm, capable of preventing the program from being executed when the program loaded from an external storage medium is one which has been copied unjustly. More particularly, but not exclusively, the invention is concerned with a system for executing a program suitable for use in a data forming apparatus for numerical control.

In general, an NC (numerical control) machine tool is a machine which operates in accordance with instructions programmed beforehand to machine a workpiece into a desired shape. More specifically, an NC tape is formed by punching a tape in accordance with predetermined rules using various numerical information such as numerical values shown in the drawings of the product to be obtained, as well as various numerical information concerning the machining conditions such as feed speed. The machining of the workpiece is conducted by reading various instructions from the NC tape loaded in the NC apparatus and then executing the instructions. The preparation of the NC tape, which is usually made by punching, requires considerable experience and time. To obviate this problem, recently, such an automatic NC tape making apparatus has been developed as adapted to automatically form the tape in accordance with input information. The automatic NC tape making apparatus incorporates various devices such as a graphic display, key board, printer and so forth, and permits a prompt and correct preparation of the NC tape advantageously. The automatic NC tape making apparatus has a computer incorporating a memory which stores the software, i.e. the program, for making the NC tape.

Different types of software are used for different forms of the machining to be performed, e.g. turning, 2-1/2-dimensional milling, 3-dimensional milling, punching, wire-cut electrospark machining and so forth. An impractically large storage capacity of the memory will be required and, hence, the cost of the NC tape making apparatus will be raised undesirably, if the memory has to store the software for all forms of machining. From the standpoint of the user, only few users require such a large capacity memory as to store all kinds of software. The manufacturers of the automatic NC tape making apparatus, therefore, prepare different magnetic tape cassettes for storing software for different kinds of machining and furnish some of these cassettes in compliance with the user's request. Namely, the user can purchase only the magnetic tape cassette storing the software in which he is interested. The user than loads the magnetic tape cassette in the automatic NC tape making apparatus to transfer the software from the magnetic tape cassette to the memory incorporated in the automatic NC tape making apparatus thereby to store the same in the memory. It is thus possible to form NC tapes such as an NC tape for turning, milling and so forth.

This magnetic tape cassette has a wide applicability and can be copied without substantial difficulty. Therefore, the manufacturer of the automatic NC tape making apparatus, who has made a heavy investment in developing the software, will be seriously damaged if the user who has purchased the magnetic tape cassette makes copies of the software and sells them unjustly or other users themselves make copies of the software to save the money for purchasing the magnetic tape cassette which is generally expensive. The manufacturer, therefore, is forced to take suitable countermeasures for unjust copying of the software (program) or unauthorised use of the copy of the program.

An article in IBM Technical Disclosure Bulletin, Vol. 21, No. 2, July 1978, by A. Gurugé discloses a method of preventing unauthorised access to diskette-loaded microcode, in which the use of particular microprograms stored on a diskette is restricted to one or more specified users. Unauthorised use is prevented by means of a hardware adapter, e.g. memory card, provided for each system controller, and storing a list of microprograms authorised for use by that controller plus a controller serial number. The diskette has a designated record for storing the controller serial number, which record is blank until the diskette is first used, when the serial number is written in.

According to the present invention, there is provided a system for executing a program, capable of preventing the program from being executed when the program has been copied unjustly, comprising computing apparatus, a storage medium, adapted to be detachably mounted in said apparatus and storing program data and code data, said apparatus comprising:

an internal memory; program executing means having a peculiar code for said apparatus and operable to execute a prescribed process according to said program data; reading means operable to read the program data and code data from said storage medium into said internal memory; discriminating means operable to discriminate whether the code data read into said internal memory is a virgin code or a peculiar code; rewriting means operable to replace the code data in said storage medium by the peculiar code of said apparatus when said code data is a virgin code; judging means operable to judge whether the code data is in conformity with the peculiar code of said apparatus when the code data is a peculiar code; and program execution inhibiting means operable to inhibit the execution of the process by said program executing means when the code data read with the program data is not in conformity with the peculiar code of the apparatus.

Accordingly, an embodiment of the invention may provide a program executing system capable of prohibiting the use of the software stored in a storage medium such as a magnetic tape cassette produced through unjust copying.

An embodiment of the invention may also provide a program executing system in which an external storage medium annexed to an apparatus making use of a program is applicable only to this apparatus, while the storage medium or another storage medium which is a copy of the first-mentioned storage medium cannot be used in another apparatus.

An embodiment of the invention may further provide a program executing system in which, when an external storage medium is used for the first time in an apparatus, the external storage medium becomes usable only in that apparatus.

In the program executing system of the invention, an external storage medium for storing the program stores also predetermined code data. When the external storage medium is loaded in an apparatus to store the program in the memory incorporated in the apparatus, the code data carried by the external storage medium is compared with the peculiar code set in the apparatus, and a judgement is made as to whether the loaded program is executable by the apparatus, in accordance with the result of the comparison. The program having any code not conforming to the code peculiar to the apparatus cannot be executed by this apparatus and, therefore, the unjust copying of the program becomes meaningless. A protection of the program is thus attained.

According to the system of the invention, when the code data stored in the storage medium is a virgin code, the code data is forcibly rewritten to be the code peculiar to an apparatus, when the storage medium is used for the first time in this apparatus. As a result, the storage medium becomes usable only in this apparatus exclusively, so that any wrongful use of the storage medium in another apparatus, as well as application of the copies to another apparatus, is prohibited effectively. This protective function is imparted by the apparatus itself.

Reference is made, by way of example, to the accompanying drawings in which:

Fig. 1 is a block diagram of an automatic NC tape making apparatus in accordance with the invention;

Fig. 2 shows the concept of the content of the MT employed by the system of the invention; and

Fig. 3 is a flow chart for explaining an embodiment of the invention.

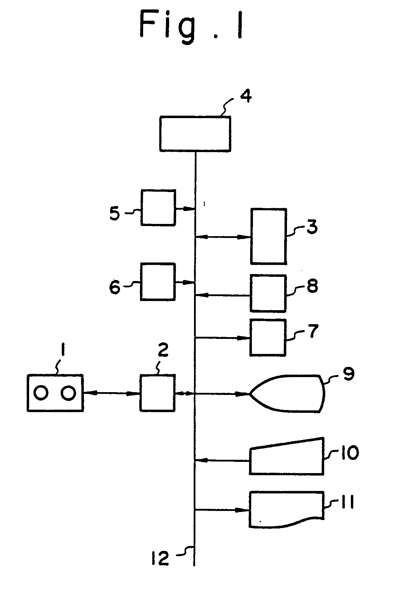

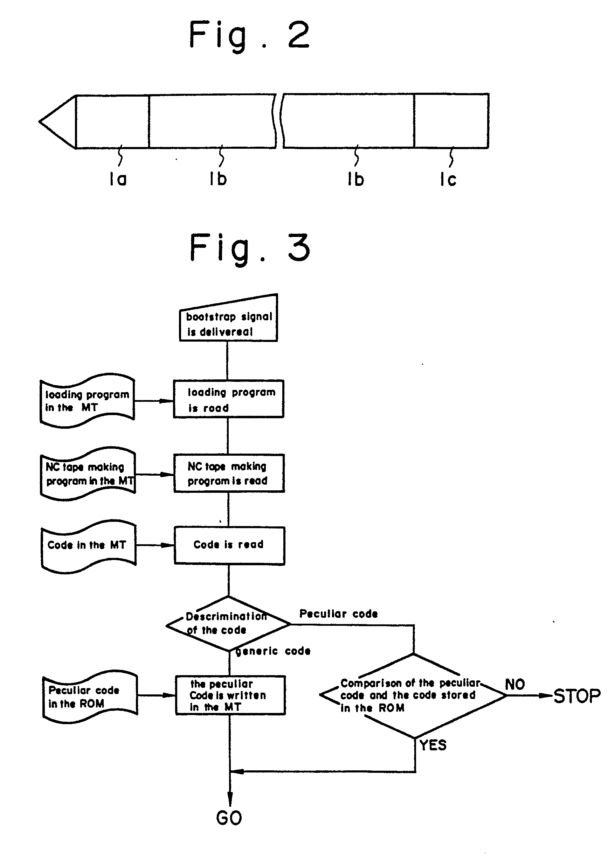

Fig. 1 is a block diagram of an automatic NC tape making apparatus for carrying out the present invention. A reference numeral 1 designates a magnetic tape cassette (referred to as "MT", hereinunder) storing a program for making an NC tape. As shown in Fig. 2, the MT 1 has a plurality of recording regions: namely, a loader recording region 1a, main recording region 1b and a code recording region 1c which are disposed from the head to the tail in the mentioned order. The loader recording region 1a stores a loading program, while the main recording region 1b stores a program, necessary for making the NC tape. The code recording region 1c stores a code peculiar to the automatic NC tape making apparatus which makes use of this MT or, alternatively, a generic code such as all "0". A reference numeral 2 designates a reading/writing device adapted to be detachably loaded with the MT 1 to read information from MT 1 or to write the above-mectioned peculiar code in the MT 1. A reference numeral 3 designates a semiconductor memory composed of a random access memory (RAM) and adapted to store information such as an NC tape making program read by reading/writing device from the MT 1, result of computation, input data and so forth. A reference numeral 4 designates a processing device such as a microprocessor, 5 denotes a read-only memory (ROM) for storing the control program and 6 denotes a code setting device constituted by, for example, a nonvolatile memory, code setting switch or the like and adapted to set or store the code peculiar to the NC tape making apparatus. This peculiar code may be stored beforehand in a predetermined address in the ROM 5. A reference numeral 7 denotes a tape puncher, 8 denotes a paper tape reader, 9 denotes a graphic display, 10 denotes a key board for inputting numerical data and commands, and 11 denotes a printer. A data bus is designated by reference numeral 12.

An explanation will be made hereinunder as to how an NC tape is made by means of a virgin MT purchased from the manufacturer, with specific reference to Fig. 3.

The code recording region 1c of the MT has, for example, 8 (eight) bits. A generic code consisting of bits $b_0$ to $b_7$ each bearing "0" is stored in this MT as a virgin code.

(1) First of all, a start switch (not shown) in the key board 10 of the automatic NC tape making apparatus is pressed. As a result, a bootstrap signal (starting signal) is delivered to the processing device 4 through the data bus 12. Subsequently, the loader (loading program) written in the loader recording region 1a is read by the reading/writing device 2 in accordance with the bootstrap signal, and is stored in the semiconductor memory 3 through the data bus 12. As this loader is executed by the processing device 4, the NC tape making program is read out from the main recording region 1b of the MT 1 and is stored in the semiconductor memory 3. Subsequently, the code stored in the code recording region 1c of the MT 1 is read by the processing device 4.

(2) The processing device 4 then judges the nature of this code.

(3) If this code is the generic code (virgin code), the processing device 4 reads the code peculiar to the automatic NC tape making apparatus from the code setting device 6 and writes the same in the code recording region 1c of the MT 1. Namely, the generic code which has been initially stored is erased and the specific code stored in the code setting device 6 is written in place of the erased code.

(4) As the foregoing steps are completed, the processing device 4 is ready for the making of the NC tape in accordance with the NC tape making program now stored in the semiconductor memory 3.

As stated before, the code peculiar to the automatic NC tape making apparatus in which the MT 1 is used for the first time is written in the code recording region 1c of the MT 1. Therefore, the MT 1 is usable only in this apparatus exclusively, for the reasons stated later.

An explanation will be made hereinunder as to how the automatic NC tape making apparatus operates when it is loaded with the exclusive MT.

As the start switch of the key board 10 is pressed after mounting this exclusive MT on the reading/writing device 2, a step similar to the aforementioned step 1 is taken and then a judgement is made as to whether the code stored in the code recording region 1c of the MT 1 is the generic code or not, as in the step (2) mentioned before.

(5) If the code thus read out is judged by the processing device 4 as not being the generic code, the peculiar code is read without delay from the code setting device 6 and is compared by the processing device 4 with the code read out from the MT 1.

(6) If the code read out from the MT 1 coincides with the peculiar code read out from the code setting device 6, this MT is accepted as the usable tape so that the NC tape is made using the program stored in this MT.

Assuming that an MT annexed to another automatic NC tape making apparatus or a copy of the same is used in this automatic NC tape making apparatus mentioned above, the MT is not accepted because the code stored in the MT does not coincide with the peculiar code stored in the code setting device 6.

(6') In consequence, a discordance signal is issued to make the atuomatic NC tape making apparatus inoperative with the program stored in the MT.

According to the embodiment of the invention described hereinbefore, the tape making operation by the automatic NC tape making apparatus is possible only with the MT annexed to the apparatus or a virgin MT (changed into MT annexed to the apparatus once used in the apparatus). It is, therefore, meaningless to make copies of the MT content. For storing the peculiar code in the ROM 5, it is necessary to write a control program including the peculiar code in each of the automatic NC tape making apparatus in the course of the production of the apparatus. Such work is extremely troublesome. To obviate this trouble, it is suggested to prepare, for example, 10 (ten) kinds of ROM tapes or master ROMs and, in the course of production of the automatic NC tape making apparatus, the content of a selected one of 10 ROM tapes or 10 master ROMs is written in the ROM 5 (master program memory) in the apparatus. By taking such a measure, the chance of applicability of a copy MT to another apparatus is considerably decreased to achieve the above mentioned purpose.

Although a magnetic tape cassette is used as the MT in the described embodiment, it will be clear to those skilled in the art that the magnetic tape cassette can be substituted by other types of recording medium such as a magnetic bubble memory, floppy disc or the like. Needless to say, the invention is applicable also to any program-controlled apparatus other than the described NC tape making apparatus.

As has been described in detail hereinbefore, according to the invention, the automatic NC tape making apparatus can operate only with the MT which is annexed to the apparatus from the beginning, i.e. from the time of shipment, or a virgin MT (changed into an MT usable exclusively for the apparatus once it is used in the apparatus), and the MT produced by copying the original MT cannot be used in other automatic tape making apparatus. The copying of the MT, therefore, is quite meaningless and useless, so that the unjust use of the developed software is effectively prohibited. The production of the MTs by the manufacturer can be made easily because it suffices only to store the generic code in the MTs. This can be made simply by making duplicates of the MTs, without requiring the manufacture of independent MTs in large quantity.

According to the invention, it is possible to invalidate the unjust copying of the program and, hence, to protect the program, in such a system that various application forms are prepared in the form of contents of external storage media in order to make the apparatus including a processing unit execute various kinds of processing to permit the user to select and purchase only the external storage medium storing the program necessary for executing the desired processing.

**Claims**

1. A system for executing a program, capable of preventing the program from being executed when the program has been copied unjustly, comprising a computing apparatus, a storage medium, adapted to be detachably mounted in said apparatus and storing program data and code data, said apparatus comprising:
an internal memory; program executing means having a peculiar code for said apparatus and operable to execute a prescribed process according to said program data; reading means operable to read the program data and code data from said storage medium into said internal memory; discriminating means operable to discriminate whether the code data read into said internal memory is a virgin code or a peculiar code; rewriting means operable to replace the code of said apparatus when said code data is a virgin code; judging means operable to judge whether the code data is in conformity with the peculiar code of said apparatus when the code data is a peculiar code and program execution inhibiting means operable to inhibit the execution of the process by said program executing means when the code data read with the program data is not in conformity with the peculiar code of the apparatus.

2. A system according to claim 1, wherein said program executing means includes means operable automatically to produce an NC tape.

3. A system according to claim 2, wherein said program data is a program for converting the input data into data for numerical control machining.

4. A system according to claim 3, further comprising inputting means for inputting numerical data, and wherein said program executing means is adapted to convert the numerical data input by said inputting means into numerical control machining data in accordance with said program data stored in said storage medium.

**Patentansprüche**

1. System zu Ausführen eines Programmes, welches System in der lage ist, zu verhindern, daß das Programm ausgeführt wird, wenn das Programm zu Unrecht kopiert worden ist, mit einem Berechnungs-Gerät, einem Speichermittel, das dazu bestimmt ist, abnehmbar an dem Gerät angebracht zu sein und Programmdaten und Codedaten zu speichern, wobei das Geräß umfaßt: einen internen internen Speicher, ein Programmausführungsmittel, das einen besonderen Code für das Gerät aufweist und betreibbar ist, um einen vorgeschriebenen Prozeß entsprechend den Programmdaten auszuführen, ein Lesemittel, das betreibbar ist, um die Programmdaten und die Codedaten aus dem Speichermittel in den internen Speicher einzulesen, ein Unterscheidungsmittel, das beteibbar ist, um festzustellen, ob die Codedaten, die in den internen Speicher eingelesen sind, einen unangetasteten Code oder einen bessonderen Code bilden, ein Wiedereinschreibmittel, das betreibbar ist, um die Codedaten in dem Speichermittel durch den besonderen Code des Geräts zu ersetzen, wenn die Codedaten einen besonderen Code bilden, ein Entscheidungsmittel, das betreibbar ist, um zu entscheiden, ob sich die Codedaten in Übereinstimmung mit dem besonderen Code des Geräts befinden, wenn die Codedaten einen besonderen Code bilden, und ein Programmausführungssperrmittel, das betreibbar ist, um das Ausführen des Prozesses durch das Programmausführungsmittel zu sperren, wenn sich die Codedaten, die mit den Programmdaten ausgelesen sind, nicht in Übereinstimmung mit dem besonderen Code des Geräts befinden.

2. System nach Anspruch 1, bei dem das Programmausführungsmittel ein Mittel enthält, das betreibbar ist, um automatisch ein NC-Band zu erzeugen.

3. System nach Anspruch 2, bei dem die Programmdaten ein Programm zu Umsetzen von eingegebenen Daten in Daten für eine Bearbeitung mit numerischer Steuerung bilden.

4. System nach Anspruch 3, das desweiteren ein Eingabemittel zur Eingabe numerischer Daten enthält und bei dem das Programmausführungsmittel dazu bestimmt ist, die numerischen Daten, welche durch das Eingabemittel eingegeben sind, in Bearbeitungsdaten für eine numerische Steuerung in Übereinstimmung mit den Programmdaten, die in dem Speichermittel gespeichert sind, umzusetzen.

**Revendications**

1. Un système pour exécuter un programme, capable d'empêcher le programme d'être exécuté quand le programme a été copié indûment, comprenant un appareil de calcul, um moyen de stockage adapté pour être monté dé façon amovible dans ledit appareil, et des données de programme d'enregistrement et des données de code, ledit appareil comprenant: une mémoire interne; des moyens d'exécution de programme ayant un code particulier pour ledit appareil et fonctionnant pour exécuter un processus prescrit selon les données dudit programme; des moyens de lecture utilisables pour lire les données de programme et les données de code dudit moyen de stockage dans ladite mémoire interne; des moyens discriminateurs fonctionnant pour discriminer si les données de code lues dans ladite mémoire interné sont un code vierge ou un code particulier; des moyens de réécriture fonctionnant pour remplacer les données de code dans ledit moyen de stockage par le code particulier dudit appareil quand lesdites données de code sont un code vierge; des moyens de jugement fonctionnant pour juger si les dennées de code sont en conformité avec le code particulier dudit appareil quand les données de code sont un code particulier; et des moyens inhibiteurs de l'exécution de programme fonctionnant pour empêcher l'exécution du processus par lesdits moyens d'exécution de programme quand les données de code lues avec les données de programme ne sont pas conformes au code particulier de l'appareil.

2. Un système selon la revendication 1, dans lequel lesdits moyens d'exécution de programme incluent des moyens fonctionnant automatiquement pour produire un ruban de commande numérique.

3. Un système selon la revendication 2, dans lequel les données de programme sont un programme pour convertir les données d'entrée en données pour usinage à commande numérique.

4. Un système selon la revendication 3, comprenant en outre des moyens d'introduction pour introduire des données numériques, et dans lequel lesdits moyens d'exécution de programme sont adaptés pour convertir l'entrée de données numériques desdites moyens d'introduction en données d'usinage à commande numérique en accord avec lesdites données de programme enregistrées dans ledit moyen de stockage.

# Fig . 1

# Fig. 2

Ia    Ib    Ib    Ic

# Fig. 3

bootstrap signal
is delivered

loading program
in the MT → loading program
is read

NC tape making
program in the MT → NC tape making
program is read

Code in the MT → Code is read

Descrimination
of the code — Peculiar code

generic code

Peculiar code
in the ROM → the peculiar
Code is written
in the MT

Comparison of the peculiar
code and the code stored
in the ROM — NO → STOP

YES

GO

2